# EUROPÄISCHE PATENTSCHRIFT

(11) **EP 1 030 872 B1**
(45) Veröffentlichungstag und Bekanntmachung des Hinweises auf die Patenterteilung: **06.02.2002**
(21) Anmeldenummer: 98967143.3
(22) Anmeldetag: 24.11.1998
(51) Int. Cl.: C08G 69/46, C08G 69/16

(54) **VERFAHREN ZUR KONTINUIERLICHEN EXTRAKTION VON POLYAMID**
CONTINUOUS POLYAMIDE EXTRACTION PROCESS
PROCEDE POUR L'EXTRACTION EN CONTINU DE POLYAMIDE

(30) Priorität: 25.11.1997 DE 19752182
(43) Veröffentlichungstag der Anmeldung: 30.08.2000
(73) Patentinhaber: BASF AKTIENGESELLSCHAFT, 67056 Ludwigshafen (DE)
(72) Erfinder: HILDENBRAND, Peter, 76199 Karlsruhe (DE); LANG, Reinhard, 67434 Neustadt (DE); LUDWIG, Alfons, 37671 Höxter (DE); PIPPER, Gunter, 67098 Bad Dürkheim (DE)
(74) Vertreter: Kinzebach, Werner, Dr.
(86) Internationale Anmeldenummer: EP9807576
(87) Internationale Veröffentlichungsnummer: WO9926998

(56) Entgegenhaltungen:
- DD-A- 289 471
- DE-A- 4 324 616
- DATABASE WPI Section Ch, Week 7706 Derwent Publications Ltd., London, GB; Class A23, AN 77-10172Y XP002100312 & JP 51 149397 A (UNITIKA LTD) , 21. Dezember 1976 in der Anmeldung erwähnt
- DATABASE WPI Section Ch, Derwent Publications Ltd., London, GB; Class A24, AN 70-60507R XP002100313 & JP 45 025519 B (TORAY IND INC) in der Anmeldung erwähnt

## Beschreibung

Die Erfindung betrifft ein Verfahren zur kontinuierlichen Gegenstromextraktion von Polyamid in einer senkrechten, zweigeteilten Extraktionskolonne, wobei man Polyamidteilchen mit im Kreislauf geführter ε-Caprolactam-haltiger Extraktionslösung behandelt.

Polyamid 6 (Polycaprolactam) wird durch Polymerisation von ε-Caprolactam hergestellt. Hierbei fällt Polycaprolactam mit einem Gehalt an Caprolactam und dessen Oligomeren von z. B. 8 bis 11 Gew.-% an. Diese niedermolekularen Bestandteile, im Folgenden zusammenfassend als Extrakt bezeichnet, verändern die Eigenschaften des Polyamids in unerwünschter Weise. Daher muß der Extrakt vor der Weiterverarbeitung des Polyamids entfernt werden. Technisch geschieht das durch kontinuierliches oder diskontinuierliches Extrahieren mit heißem Wasser (DE-A-25 01 348, DE-A-27 32 328) und durch Abdestillieren im Vakuum (US-A 4,376,680) oder im überhitzten Wasserdampfstrom (EP 0 284 968 B1). All diese Verfahren werden aus Gründen des Umweltschutzes und der Wirtschaftlichkeit unter Rückgewinnung und Wiederverwendung des Extrakts durchgeführt. Der bei diesen Verfahren für Polyamid 6 erreichte, noch enthaltene Restextrakt (mit Methanol extrahierbare Bestandteile) besteht im Wesentlichen aus den in Wasser schwerlöslichen bzw. schwerflüchtigen Oligomeren des Caprolactam, insbesondere den cyclischen Oligomeren und insbesondere den Dimeren.

Es wurden auch verschiedene Vorrichtungen zur Extraktion von niedermolekularen Bestandteilen aus Polyamiden vorgeschlagen. In der GB 12 97 606 wird eine in mindestens zwei Zonen aufgeteilte Extraktionskolonne offenbart, wobei das im Gegenstrom geführte Extraktionsmittel innerhalb jeder Zone entgegen der Flüssigkeitsströmung am oberen Ende der Zone entnommen und am unteren Ende der Zone wieder zugeführt wird. Ähnliche Vorrichtungen sind beispielsweise auch in der CZ 253 019, FR 15 18 775, DD 206 999 und DE-A-17 70 097 beschrieben.

Es ist bekannt, dass Caprolactam bei der Extraktion von Polyamid 6 als Lösungsvermittler gegenüber den Oligomeren des Lactams wirkt. Deshalb wird z. B. gemäß der JP-A-47 026 438 das Granulat zur Entfernung der wasserlöslichen Anteile in Polyamid 6 mit einer Lösung von 15 bis 90 %, vorzugsweise 40 bis 70 % ε-Caprolactam in Wasser vorbehandelt oder gemäß DD 289 471 das Granulat zu Beginn der Gegenstromextraktion mit 1 bis 40 % Caprolactam im Extraktionswasser bei Temperaturen oberhalb von 60 °C behandelt (die Prozentangaben beziehen sich jeweils auf das Gewicht). In der DE-A-43 24 616 wird ein Verfahren zur Extraktion von Polyamid 6, das zu Produkten mit sehr geringem Restgehalt an dimerem ε-Caprolactam führt, offenbart. Dabei schließen sich an eine erste Stufe, in der bei 80 bis 120 °C mit 41 bis 80 %iger Caprolactamlösung extrahiert wird, eine oder mehrere Nachextraktionsstufen entweder mit Wasser bei hoher Temperatur oder im Vakuum an. Die JP-A-48 002 233 beschreibt die Reinigung von Polycaprolactam durch Versetzen des geschmolzenen Polymers mit 5 bis 30 %iger Caprolactamlösung und die anschließende Reinigung der erhaltenen Dispersion bei 80 bis 120 °C in einer Extraktionskolonne. In der JP-A-53 071 196 wird Polyamid zunächst mit einem heißen, wässrigen Medium extrahiert und dann bei Temperaturen von 10 bis 50 °C unter dem Schmelzpunkt des Polyamids in einem Inertgasstrom gereinigt, wobei das heiße, wässrige Medium z. B. Wasser mit Temperaturen von 80 bis 130 °C mit weniger als 50 Gew.-% ε-Caprolactam umfasst. Die JP-B-45 025 519 offenbart einen mehrstufigen Extraktionsprozess, wobei das Polyamidgranulat in der ersten Stufe bei 70 bis 120 °C mit einer 5 bis 50 %igen wässrigen Caprolactamlösung und in der zweiten Stufe mit 0,1 bis 5 %iger wässriger Caprolactamlösung bei 70 bis 120 °C extrahiert wird. Die JP-A-51 149 397 beschreibt die Extraktion mit einer wässrigen 60 gew.-%igen ε-Caprolactamlösung bei 80 bis 120 °C für 3 bis 8 Stunden in der ersten Stufe und die Extraktion mit caprolactamfreiem Wasser, das vorzugsweise O₂-frei ist oder geringe Mengen eines reduzierenden Agens enthält, in der letzten Stufe. Auch diese Verfahren werden aus Gründen des Umweltschutzes und der Wirtschaftlichkeit vorzugsweise unter Rückgewinnung und Wiederverwendung des Extrakts durchgeführt. Demgemäß wird in der JP-A-60 166 324 eine Vorrichtung zur kontinuierlichen Extraktion von Polyamid 6 offenbart, in der das Granulat mit Wasser im Gegenstrom extrahiert wird, wobei man die Hauptmenge der Extraktionsflüssigkeit unter Zusatz von ε-Caprolactam im Kreislauf führt. Das Extraktionsmittel wird durch einen Ansaugstutzen abgepumpt, mit Caprolactam versetzt und über eine Verteilerdüse auf derselben Höhe, in der sich der Ansaugstutzen befindet, in die Vorrichtung zurückgeführt. Der Restextraktgehalt liegt bei 1 %.

In der DE-A-195 05 150 werden die Oligomeren des Caprolactam durch Behandlung mit reinem Caprolactam als Extraktionsmittel bei 60 bis 150 °C aus Polyamidgranulat entfernt. Dieses Verfahren hat jedoch den Nachteil, dass in einer zweiten Extraktion das Caprolactam entfernt werden muss, das zudem durch Verkleben des Polyamidgranulats zu Schwierigkeiten bei weiteren Prozessstufen führt. Teilweise löst sich bei diesen Temperaturen auch das Granulat in Caprolactam.

Die Extraktion von Polyamidgranulat mit Wasser oder Wasserdampf führt nur mit erheblichem Aufwand zu den heute geforderten Restextraktgehalten < 0,5 %. Ebenso wie bei den Verfahren unter Verwendung von Caprolactam-haltigen Extraktionsmitteln fällt bei der Extraktion üblicherweise eine Lösung mit 5 bis 15 % Extraktgehalt an. zusätzlich können noch anorganische Hilfsstoffe wie Titandioxid, Siliciumdioxid und Manganoxid enthalten sein, die dem Polyamid üblicherweise zur Stabilisierung oder Mattierung zugesetzt worden sind. Den Verfahren des Standes der Technik ist gemeinsam, dass entweder der Restextraktgehalt zu hoch ist oder zur Rückführung des Caprolactam und seiner Oligomeren in die Polymerisation große Mengen wässriger Lösung stark aufkonzentriert werden müssen, wobei sich Oligomere und anorganische Hilfsstoffe abscheiden können. Das Aufkonzentrieren erfordert zudem erhebliche Energiemengen.

Aufgabe der Erfindung war es daher, ein Verfahren zur Reinigung von Polyamid bereitzustellen, wobei ein möglichst niedriger Restgehalt an Monomeren und Oligomeren erreicht werden soll, ohne dass größere Mengen Extraktionsmittel mit niedrigem Extraktgehalt anfallen.

Überraschend wurde nun gefunden, dass diese Aufgabe gelöst wird durch ein Verfahren zur kontinuierlichen Extraktion von Polyamidteilchen, insbesondere Polyamidgranulat oder -schnitzel, mit einem wässrigen Extraktionsmittel in einer im Wesentlichen senkrechten Extraktionskolonne, das dadurch gekennzeichnet ist, dass man eine in zwei Zonen unterteilte Extraktionskolonne verwendet und in der ersten Zone eine Extraktion mit einer 15 bis 40 gew.-%igen wässrigen ε-Caprolactam-Lösung bei im Kreislauf und dann in der zweiten Zone eine Extraktion mit Wasser im Gegenstrom durchführt, wobei der Durchmesser der Extraktionskolonne in der ersten Zone größes ist als derjenige in der zweiten Zone und wobei sich am Übergang von der ersten zur zweiten Zone eine Strömungssperre befindet.

Das Verfahren hat den Vorteil, dass der Gehalt an Oligomeren des Caprolactam im Polyamidgranulat auf einfache Weise gesenkt wird, wobei eine Extraktlösung erhalten wird, die mit deutlich geringerem Aufwand bei der Aufarbeitung dem Polymerisationsreaktor zugeführt werden kann. Zudem wird der geforderte niedrige Restextraktgehalt von < 0,5 %, insbesondere < 0,1 % Dimer, kostengünstig und auf einfache Weise in einer einzigen Extraktionsvorrichtung erreicht. Die Extraktion erreicht zudem erheblich schneller den gewünschten niedrigen Gehalt an Oligomeren als dies bei den Verfahren gemäß dem Stand der Technik erfolgt.

Geeignete Polyamide sind Polycaprolactam oder Copolyamide, aufgebautausCaprolactam undweiterenPolyamid-bildenden Ausgangsstoffen, wobei der Anteil der sich von Caprolactam ableitet, vorzugsweise mindestens 20 Gew.-%, insbesondere mindestens 25 Gew.-% beträgt. Bevorzugte polyamidbildende Ausgangsstoffe sind Diamine und Dicarbonsäuren, die zur Bildung von Polyamiden geeignet sind. Geeignete Dicarbonsäuren sind beispielsweise Alkandicarbonsäure mit 6 bis 12 Kohlenstoffatomen, insbesondere 6 bis 10 Kohlenstoffatomen sowie Terephthal- und Isophthalsäure. Geeignete Diamine sind beispielsweise Alkandiamine mit 4 bis 12, insbesondere 6 bis 8 Kohlenstoffatomen, ferner m-Xylylendiamin, Bis-(4-aminophenyl)methan, Bis-(4-aminophenyl)propan-2,2 oder Bis-(4-aminocyclohexyl)methan. Dicarbonsäuren und Diamine können jeweils für sich in beliebigen Kombinationen, jedoch vorteilhaft im äquivalenten Verhältnis, verwendet werden. Besondere technische Bedeutung haben Polycaprolactam, Polyamide, die aus Caprolactam, Hexamethylendiamin sowie Adipinsäure, Isophthalsäure und/oder Terephthalsäure aufgebaut sind, erlangt.

In der Regel geht man von Polyamidgranulat mit einem Gehalt von 2 bis 15 Gew.-% Caprolactam und dessen Oligomeren, insbesondere 8 bis 12 Gew.-% Caprolactam und dessen Oligomeren aus. Im Allgemeinen hat das Polyamidgranulat eine Granulatgröße von 1,5 x 1,5 bis 4 x 4 mm, zum Beispiel eine zylindrische Form mit Abmessungen von ca. 3 x 2 mm.

Die verwendeten Polyamide können zusätzlich übliche Additive wie Mattierungsmittel, z. B. Titandioxid, Keimbildner, z. B. Magnesiumsilicat, Stabilisatoren, z. B. Kupfer(I)halogenide und Alkalihalogenide, Antioxidantien sowie Verstärkungsmittel in üblichen Mengen enthalten. Die Additive werden in der Regel vor, während oder nach der Polymerisation und vor dem Granulieren zugesetzt.

Das Polyamidgranulat wird nach der Polymerisation und der anschließenden Granulierstufe, zum Beispiel über einen Transportwasserkreislauf, der zweigeteilten, vorzugsweise rohrförmigen Extraktionskolonne zugeführt. Es kann beispielsweise über eine Abscheidevorrichtung vom Transportwasser getrennt werden und wird dann, üblicherweise mit einer Temperatur von 20 bis 90 °C, von oben in die Extraktionskolonne, d. h. in den Extraktorkopf, aufgegeben. Es durchströmt dann die Extraktionskolonne aufgrund der Schwerkraft von oben nach unten und wird am Fuß der Extraktionskolonne ausgetragen. Am Fuß der Extraktionskolonne wird kontinuierlich Wasser als Extraktionsmittel zugeführt, das die Extraktionskolonne im Gegenstrom von unten nach oben durchläuft.

Das Extraktionsmittel belädt sich im unteren Bereich der Extraktionskolonne, der zweiten Zone, mit Caprolactam und dessen Oligomeren. Im oberen Teil der Extraktionskolonne (Extraktorkopf) wird das Extraktionsmittel im Kreislauf geführt. Auf diesen Extraktorkopf, die erste Zone, entfallen 5 bis 50 %, vorzugsweise 15 bis 30 % des Gesamtvolumens des Extraktors. Das Extraktionsmittel wird vorzugsweise oben in der ersten Zone abgezogen und im unteren Bereich der ersten Zone über eine Verteilungseinrichtung gleichmäßig in die Extraktionskolonne zurückgeführt. Es kann aber auch umgekehrt verfahren werden, d. h. das Extraktionsmittel wird im unteren Bereich abgezogen und im oberen Bereich zurückgeführt. Die im Kopf umgewälzte Extraktionsmittelmenge wird dabei so gewählt, dass einerseits ein Temperatur- und Konzentrationsausgleich in dieser Zone sichergestellt wird und ein intensiver Stoffaustausch an der Phasengrenzfläche der Polyamidteilchen stattfindet. Andererseits soll die Strömungsgeschwindigkeit der wässrigen Lösung den wirbelpunkt der Teilchen nicht überschreiten. Demgemäß wird im Allgemeinen eine Geschwindigkeit von etwa 2 bis 20 m/h, vorzugsweise von 3 bis 15 m/h eingestellt. Zusätzlich besitzt der Extraktorkopf einen größeren Durchmesser als die zweite Zone, um dem Aufwirbeln der Teilchen zusätzlich entgegenzuwirken. Das Verhältnis der Querschnittsfläche in der ersten Zone zu der in der zweiten Zone beträgt bis 3:1, insbesondere bis 2:1. Das Verhältnis der Länge der ersten Zone zu derjenigen der zweiten Zone liegt im Allgemeinen im Bereich von 0,05:1 bis 1:1, vorzugsweise 0,1:1 bis 0,3:1. Die Temperatur im Extraktorkopf beträgt 100 bis 140 °C, bevorzugt 115 bis 130 °C, und wird durch einen außerhalb der Extraktionskolonne im Kopfkreislauf des Extraktionsmittels befindlichen Wärmetauscher eingestellt. Durch Zugabe von flüssigem Caprolactam mit einer Temperatur von 80 bis 100 °C in den Kopfkreislauf wird im Extraktorkopf eine Caprolactamkonzentration von 15 bis 40 %, vorzugsweise von 20 bis 40 %, insbesondere 20 bis 30 %, eingestellt. Dadurch wird eine schnellere und aufgrund der günstigeren Gleichgewichtslage vermehrte Abreicherung der Oligomeren des Caprolactams, insbesondere des Dimeren, aus dem Polyamid erreicht. Das Extraktionsmittel wird aus dem Kopfkreislauf entsprechend der am Fuß des Extraktors zugeführten Wassermenge und der in der ersten Zone zugeführten Caprolactammenge kontinuierlich ausgekreist.

Am Übergang von der ersten in die zweite Zone der Extraktionskolonne befindet sich eine Strömungssperre, die, zum Beispiel durch eine Verengung des Strömungsquerschnitts, ein Absinken der spezifisch schwereren wässrigen Lösung aus dem Extraktorkopf in die darunterliegende zweite Zone verhindert. Beispielsweise kann durch eine wabenförmige Einschnürung die Leerrohr-Strömungsgeschwindigkeit der aufsteigenden Flüssigphase erhöht werden. Die Verengung des Strömungsquerschnitts unterhalb des Extraktorkopfs trennt zudem den durch starke Rückvermischung gekennzeichneten Bereich der ersten Zone von der zweiten Zone, in der ein Gegenstrom-Konzentrationsprofil mit möglichst geringer Rückvermischung angestrebt wird, sehr wirkungsvoll ab. Weiterhin wird ein Absinken des spezifisch schwereren Extraktionsmittels aus dem Extraktorkopf durch Absenkung der Temperatur in der zweiten Zone um 5 bis 40 °C, bevorzugt 10 bis 20 °C, gegenüber der Temperatur in der ersten Zone verhindert. Außerdem wird die Strömungsgeschwindigkeit des Extraktionsmittels in der zweiten Zone relativ hoch eingestellt, indem diese zweite, zum Beispiel rohrförmige Zone mit einem möglichst kleinen Durchmesser ausgeführt wird. Die Leerrohr-Strömungsgeschwindigkeit beträgt üblicherweise 0,2 bis 6,0 m/h, vorzugsweise 1 bis 3 m/h. Der Rohrquerschnitt kann aufgrund der vergleichsweise kurzen, zu einer ausreichenden Extraktion benötigten Verweilzeit von 5 bis 20 Stunden Gesamtverweilzeit, insbesondere von 8 bis 15 Stunden Gesamtverweilzeit, relativ klein sein. Weiterhin ergibt sich aus dem daraus resultierenden geringen Extraktorvolumen eine relativ geringe, kostensparende Bauhöhe.

Die Extraktion in der ersten Zone und in der zweiten Zone erfolgt im Allgemeinen bei einer Temperatur im Bereich von 80 bis 140 °C. Vorzugsweise ist die Temperatur in der zweiten Zone, wie erwähnt, um 5 bis 40 °C niedriger. Die Temperatur in der zweiten Zone kann jedoch auch höher sein als diejenige der ersten Zone, insbesondere wenn die erwähnte Verengung des Strömungsquerschnittes und eine hohe Strömungsgeschwindigkeit des Extraktionsmittels in der zweiten Zone vorgesehen sind.

Durch die Zugabe von Caprolactam bei der Extraktion wird das anfallende Extraktwasser stabilisiert, so dass Konzentrationen der Oligomere von bis zu 6 % im ausgekreisten Extraktionsmittel möglich sind, ohne dass störende Ausscheidungen im Folgeprozess auftreten. Das Verhältnis Extraktionsmittel/Polyamid liegt bei dem erfindungsgemäßen Verfahren im Bereich von 0,5:1 bis 2:1. Im Vergleich zum Stand der Technik bei der Extraktion ohne Zugabe von Caprolactam wird somit im erfindungsgemäßen Verfahren aufgrund der günstigeren Gleichgewichtslage und der beschleunigten Extraktion ein kleineres Wasser/Polyamid-Verhältnis benötigt. Dadurch verringert sich die in der Extraktwasseraufarbeitung zu verdampfende Wassermenge, wodurch die Wirtschaftlichkeit des Gesamtverfahrens verbessert wird.

Das Polyamid wird vorzugsweise über eine Schnecke, insbesondere eine tiefgezogene Einwellenschnecke, aus dem Extraktor ausgetragen und kontinuierlich in einen Transportwasserkreislauf dosiert. Über die Drehzahl der Schnecke wird die ausgetragene Polyamidmenge und dadurch der Polyamidstand in der Extraktionskolonne geregelt. Die Austragsschnecke ermöglicht einen sehr gleichmäßigen, abriebfreien Polyamidaustrag. Verbrückungen der Teilchen werden ebenfalls vermieden. Da der Austrag auch leckagefrei erfolgt, wird das Gegenstrom-Konzentrationsprofil im Extraktor nicht gestört. Die Zugabe einer geringen Wassermenge in den Transportwasserkreislauf, die durch die Schnecke hindurch dem Extraktor zugeführt wird, erzeugt in der Schnecke eine Flüssigkeitsströmung entgegen dem austretenden Polyamid und eine Aufwärtsströmung der Flüssigphase im Fuß des Extraktors, wodurch eine Rückvermischung vermieden wird.

Das erfindungsgemäß behandelte Polyamid hat einen Restextraktgehalt von weniger als 0,5 Gew.-%, insbesondere weniger als 0,3 Gew.-%, und einen besonders niedrigen Gehalt an dimerem Caprolactam von weniger als 0,1 Gew.-%, insbesondere weniger als 0,01 Gew.-%.

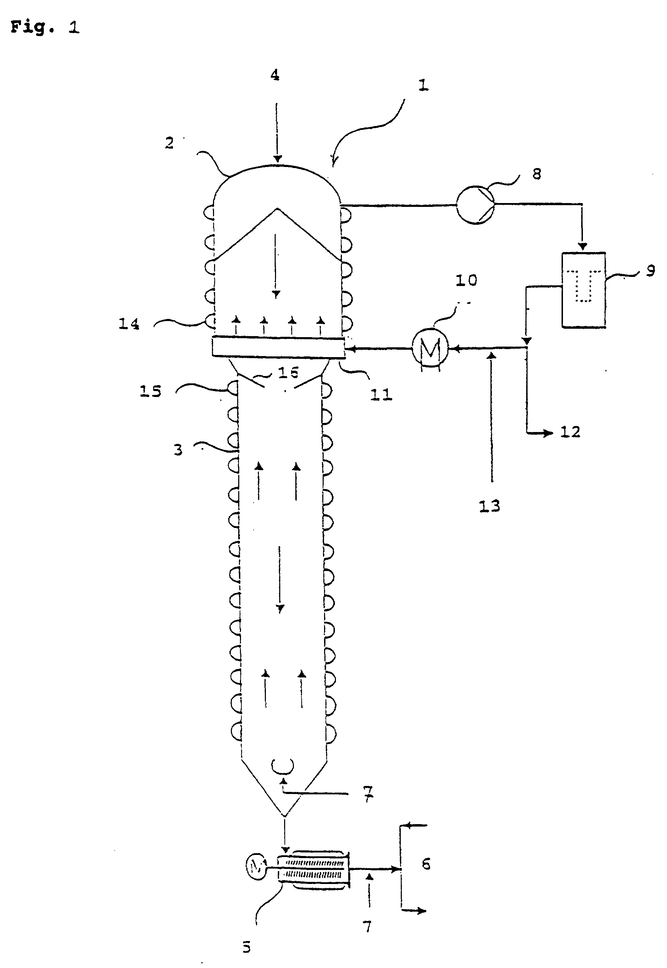

In der Figur ist beispielhaft eine Extraktionskolonne für das erfindungsgemäße Verfahren schematisch dargestellt. Die Extraktionskolonne 1 umfasst eine erste (obere) Zone 2 und eine zweite, (untere) rohrförmige Zone 3. Das Verhältnis der Länge der ersten Zone 2 zu derjenigen der zweiten Zone 3 liegt im Allgemeinen im Bereich von 0,05:1 bis 1:1, vorzugsweise von 0,1:1 bis 0,3:1. Das Polyamidgranulat 4 wird von oben in die erste Zone 2 eingetragen, durchläuft diese von oben nach unten und anschließend die rohrförmige zweite Zone 3 und wird dann über die Austragsschnecke 5 in den Transportwasserkreislauf 6 ausgetragen. Wasser 7 wird durch die Austragsschnecke 5 und über eine Ringdüse im Fuß des Extraktors von unten der Extraktionskolonne 1 zugeführt. Beim Durchlaufen der Extraktionskolonne 1 nimmt es in der zweiten Zone 3 zunächst Caprolactam auf und vermischt sich dann im unteren Teil der ersten Zone 2 mit dem dort im Kreislauf geführten Extraktionsmittel. Dieses wird im oberen Teil der ersten Zone 2 durch eine Pumpe 8 entnommen, in dem Filter 9 filtriert, über einen Wärmetauscher 10, durch den die Temperatur im gewünschten Bereich gehalten wird, geführt und über eine Ringdüse oder Lochplatte 11 im unteren Bereich der ersten Zone 2 wieder zugeführt. Ein Teil des Extraktionsmittels wird an 12 ausgekreist und über 13 wird soviel frisches Caprolactam zugesetzt, dass die Caprolactamkonzentration im Extraktionsmittel im gewünschten Bereich gehalten wird. Die erste und die zweite Zone werden über die Mantelheizrohre 14 bzw. 15 beheizt. Zwischen der ersten und der zweiten Zone befindet sich eine Verengung des Strömungsquerschnitts 16, die zusammen mit der im Vergleich zur zweiten Zone 3 höheren Temperatur in der ersten Zone 2 ein Absinken der spezifisch schwereren, Caprolactam-haltigen Lösung verhindert.

### Beispiele

Die folgenden Beispiele sollen das erfindungsgemäße Verfahren weiter veranschaulichen. Das eingesetzte, unextrahierte Polyamid 6-Granulat hat ein mittleres Korngewicht von 12,5 bis 14,5 mg und eine zylindrische Form mit Abmessungen von etwa 3 x 2 mm. Es enthält 9,0 % Caprolactam und 0,63 % Dimer.

### Beispiel 1

In die erste Zone 2 einer Extraktionskolonne 1 gemäß Figur mit einer Länge der ersten Zone 2 von 4500 mm bei einem Durchmesser von 147 mm und einer Länge der zweiten Zone 3 von 23000 mm und einem Durchmesser von 113 mm werden kontinuierlich 20 kg/h unextrahiertes Polyamid 6-Granulat 4 gegeben. 20 kg/h Frischwasser 7 mit einer Temperatur von 104 °C werden kontinuierlich am Fuß des Extraktors 1 zugeführt. In der ersten Zone 2 werden 0,2 m³/h Extraktwasser mit einer Umwälzpumpe 8 entnommen und nach Passieren einer Filtrationsvorrichtung 9 und eines Wärmetauschers 10 über eine Ringdüse oder Lochplatte 11, die 4400 mm unterhalb der Wasseroberfläche liegt, in den Extraktor 1 zurückgeführt. Über den Wärmetauscher 10 wird in der ersten Zone 2 eine Temperatur von 121 °C eingestellt. In den Kreislauf des Extraktionsmittels werden vor dem Wärmetauscher 3,3 kg/h flüssiges Caprolactam 13 zudosiert, so dass in der ersten Zone 2 eine Caprolactamkonzentration von ca. 20 % eingestellt wird. Unterhalb des Extraktorkopfs befindet sich eine Strömungssperre 16 in Form einer wabenförmigen Einschnürung mit einem freien Durchmesser von 40 mm. Diese Verengung des Strömungsquerschnitts führt zu einer Erhöhung der Leerrohr-Strömungsgeschwindigkeit der aufsteigenden Wasserphase auf 15,9 m/h in diesem Bereich. Das aus dem Extraktor 1 durch die Austragsschnecke 5 ausgetragene Polyamid 6-Granulat besitzt einen Restextraktgehalt von 0,3 % und einen Dimergehalt von 0,02 %.

### Vergleichsbeispiel 1

Polyamid 6-Granulat wird auf die gleiche Weise wie in Beispiel 1 behandelt, jedoch wird im Extraktorkopf kein Caprolactam zugegeben. Dabei wird unter sonst identischen Bedingungen ein Polyamid 6-Granulat mit einem Restextraktgehalt von 1,1 % und einem Dimergehalt von 0,12 % erhalten.

### Beispiel 2

Man verfährt analog zu Beispiel 1 mit der Ausnahme, dass am Fuß des Extraktors anstelle von 20 kg/h 16 kg/h Frischwasser mit einer Temperatur von 104 °C zugeführt werden und in den Kopfkreislauf 2,3 kg/h flüssiges Caprolactam anstelle von 3,3 kg/h flüssiges Caprolactam zudosiert werden. Dies entspricht einem Wasser/ Granulat-Verhältnis von 0,8. Man erhält ein Polyamid 6-Granulat mit einem Restextraktgehalt von 0,4 % und einem Dimergehalt von 0,05 %.

### Vergleichsbeispiel 2

Man verfährt analog zu Beispiel 2, jedoch unter Extraktion mit Wasser ohne Zugabe von Caprolactam im Extraktorkopf. Das ausgetragene Polyamid 6-Granulat hat einen Restextraktgehalt von 1,4 % und einen Dimergehalt von 0,15 %.

### Beispiel 3

Unter denselben Bedingungen wie in Beispiel 1 wird ein unextrahiertes Polyamid 6-Granulat mit einem mittleren Korngewicht von 6,5 mg und einer zylindrischen Form eingesetzt. Das ausgetragene Polyamid 6-Granulat hat einen Restextraktgehalt von 0,15 % und einen Dimergehalt von weniger als 0,008 %.

Gewünschtenfalls kann sich eine weitere Reinigung des Polyamid nach bekannten Verfahren anschließen, beispielsweise eine gleichzeitige Extraktion und Temperung gemäß EP 0 284 968.

## Patentansprüche

1. Verfahren zur kontinuierlichen Extraktion von Polyamidteilchen mit einem wässrigen Extraktionsmittel in einer im Wesentlichen senkrechten Extraktionskolonne, **dadurch gekennzeichnet, dass** man eine in zwei Zonen unterteilte Extraktionskolonne verwendet und in der ersten Zone eine Extraktion mit einer 15 bis 40 gew.-%igen wässrigen ε-Cagrolactam-Lösung im Kreislauf und dann in der zweiten Zone eine Extraktion mit Wasser im Gegenstrom durchführt, wobei der Durchmesser der Extraktionskolonne in der ersten Zone größer ist als derjenige in der zweiten Zone und wobei sich am Übergang von der ersten zur zweiten Zone eine Strömungssperre befindet.

2. Verfahren nach Anspruch 1, **dadurch gekennzeichnet, dass** das Extraktionsmittel durch Entnahme im oberen Bereich der ersten Zone und Zufuhr in den unteren Bereich der ersten Zone im Kreislauf geführt wird.

3. Verfahren nach Anspruch 1, **dadurch gekennzeichnet, dass** das im Kreislauf geführte Extraktionsmittel über eine Ringdüse oder Lochplatte in die Extraktionskolonne zurückgeführt wird.

4. Verfahren nach Anspruch 1, **dadurch gekennzeichnet, dass** außerhalb der Extraktionskolonne soviel des im Kreislauf geführten Extraktionsmittels ausgekreist und durch Caprolactam ersetzt wird, dass sich zusammen mit dem in der zweiten Zone zugeführten Wasser in der ersten Zone ein Caprolactamgehalt von 15 bis 40 Gew.-% einstellt.

5. Verfahren nach Anspruch 1, **dadurch gekennzeichnet, dass** das Verhältnis der Querschnittsfläche der ersten Zone der Extraktionskolonne zu der der zweiten Zone bis zu 3:1 beträgt.

6. Verfahren nach Anspruch 1, **dadurch gekennzeichnet, dass** das Verhältnis der Länge der ersten Zone zu der der zweiten Zone 0,05:1 bis 1:1 beträgt.

7. Verfahren nach einem der vorhergehenden Ansprüche, **dadurch gekennzeichnet, dass** man die Extraktion in der ersten Zone bei einer Temperatur im Bereich von 100 bis 140 °C und in der zweiten Zone bei einer um 5 bis 40 °C niedrigeren Temperatur durchführt.

8. Verfahren nach Anspruch 1, **dadurch gekennzeichnet, dass** 5 bis 20 Stunden, vorzugsweise 8 bis 15 Stunden, extrahiert wird.

9. Verfahren nach Anspruch 1, **dadurch gekennzeichnet, dass** die Zugabe von Extraktionsmittel zu dem Polyamid im Gewichtsverhältnis 0,5:1 bis 2:1 erfolgt.

10. Verfahren nach einem der vorhergehenden Ansprüche, **dadurch gekennzeichnet, dass** das extrahierte Polyamid mit einer Einwellenschnecke aus dem Extraktor ausgetragen wird.

## Claims

1. A process for continuous extraction of polyamide particles in an essentially vertical extraction column using an aqueous extractant, which comprises using an extraction column that is divided into two zones and performing an extraction with a recirculating 15 - 40% strength by weight aqueous ε-caprolactam solution in the first zone and then with countercurrent water in the second zone, the diameter of the extraction column in the first zone being greater than that in the second zone and the transition from the first to the second zone being equipped with a flow barrier.

2. A process as claimed in claim 1, wherein the extractant is recirculated by removing it in the top region of the first zone and feeding it into the bottom region of the first zone.

3. A process as claimed in claim 1, wherein the recirculated extractant is returned into the extraction column via an annular nozzle or perforated plate.

4. A process as claimed in claim 1, wherein a sufficient amount of the recirculating extractant is removed outside the extraction column and replaced with fresh caprolactam to establish a caprolactam content of from 15 to 40% by weight in the first zone together with the water introduced into the second zone.

5. A process as claimed in claim 1, wherein the ratio of the cross-sectional area of the first zone of the extraction column to that of the second zone is up to 3:1.

6. A process as claimed in claim 1, wherein the ratio of the length of the first zone to that of the second zone is within the range from 0.05:1 to 1:1.

7. A process as claimed in any of the preceding claims, wherein the extraction is carried out at from 100 to 140°C in the first zone and at a from 5 to 40°C lower temperature in the second zone.

8. A process as claimed in claim 1, wherein the extraction time is within the range from 5 to 20 hours, preferably within the range from 8 to 15 hours.

9. A process as claimed in claim 1, wherein the extractant is added to the polyamide in a weight ratio within the range from 0.5:1 to 2:1.

10. A process as claimed in any of the preceding claims, wherein the extracted polyamide is discharged from the extractor using a single screw.

## Revendications

1. Procédé d'extraction continue de particules de polyamide au moyen d'un agent d'extraction aqueux, dans une colonne d'extraction essentiellement verticale, **caractérisé en ce que** l'on utilise une colonne d'extraction partagée en deux zones et que l'on opère, dans la première zone, une extraction au moyen d'une solution aqueuse de ε -caprolactame d'une concentration de 15 à 40% en poids mise en circulation et ensuite, dans la deuxième zone, une extraction par de l'eau en contre-courant, le diamètre de la colonne d'extraction dans la première zone étant plus grand que celui de la deuxième zone, et un limiteur de débit étant installé à la transition entre la première zone et la deuxième zone.

2. Procédé selon la revendication 1, **caractérisé en ce que** l'agent d'extraction est mis en circulation par soutirage dans la partie supérieure de la première zone et injection dans la partie inférieure de la première zone.

3. Procédé selon la revendication 1, **caractérisé en ce que** l'agent d'extraction mis en circulation est recyclé dans la colonne d'extraction via un ajutage annulaire ou une plaque perforée.

4. Procédé selon la revendication 1, **caractérisé en ce qu'**à l'extérieur de la colonne d'extraction, on extrait du circuit et on remplace par du caprolactame une quantité de l'agent d'extraction mis en circulation telle que, avec l'eau introduite dans la deuxième zone, il s'établisse dans la première zone une teneur en caprolactame de 15 à 40% en poids.

5. Procédé selon la revendication 1, **caractérisé en ce que** le rapport de la surface de la section transversale de la première zone de la colonne d'extraction à celle de la deuxième zone est d'un maximum de 3:1.

6. Procédé selon la revendication 1, **caractérisé en ce que** le rapport de la longueur de la première zone à celle de la deuxième zone est de 0,05:1 à 1:1.

7. Procédé selon l'une des revendications qui précèdent, **caractérisé en ce que** l'on entreprend l'extraction dans la première zone à une température de l'ordre de 100 à 140°C, et dans la deuxième zone à une température de 5 à 40°C inférieure.

8. Procédé selon la revendication 1, **caractérisé en ce que** l'on procède à l'extraction pendant 5 à 20 heures, de préférence pendant 8 à 15 heures.

9. Procédé selon la revendication 1, **caractérisé en ce que** l'amenée d'agent d'extraction est en rapport pondéral au polyamide de 0,5:1 à 2:1.

10. Procédé selon l'une des revendications qui précèdent, **caractérisé en ce que** le polyamide extrait est déchargé de l'extracteur au moyen d'une vis sans fin simple.
